# EUROPEAN PATENT SPECIFICATION

(11) **EP 3 649 386 B1**
(45) Date of publication and mention of the grant of the patent: **24.01.2024**
(21) Application number: 18829127.2
(22) Date of filing: 04.06.2018
(51) Int. Cl.: F16K 11/065, B60K 11/02, F01M 1/16, F01P 7/14, F16H 57/04, F16K 31/122

(54) **AN OIL DISTRIBUTOR FOR A LUBRICATING AND COOLING SYSTEM IN A POWERTRAIN**
ÖLVERTEILER FÜR EIN SCHMIER- UND KÜHLSYSTEM IN EINEM ANTRIEBSSTRANG
DISTRIBUTEUR D'HUILE POUR UN SYSTÈME DE LUBRIFICATION ET DE REFROIDISSEMENT DANS UN GROUPE MOTOPROPULSEUR

(30) Priority: 07.07.2017 SE 1750895
(43) Date of publication of application: 13.05.2020
(73) Proprietor: Scania CV AB, 151 87 Södertälje (SE)
(72) Inventor: KARLSSON, Stefan, 144 52 Södertälje (SE)
(74) Representative: Scania CV AB
(86) International application number: PCT/SE2018/050571
(87) International publication number: WO 2019/009775

(56) References cited:
- DE-A1- 3 238 781
- DE-A1- 3 705 817
- DE-A1-102014 018 128
- DE-A1-102015 223 952
- US-A- 3 817 266
- US-A- 4 756 330
- US-A- 4 756 330
- US-A1- 2006 223 670
- US-A1- 2009 232 673

## Description

### TECHNICAL FIELD

The invention relates to an oil distributor for a lubricating and cooling system in a powertrain, a lubricating and cooling system in a powertrain comprising such an oil distributor, a powertrain, a vehicle and a method of controlling a lubricating and cooling system in a powertrain according to the appended claims.

### BACKGROUND AND PRIOR ART

In vehicles, and especially for heavier vehicles such as trucks, an oil distributor may be arranged for supplying oil to powertrains provided with an internal combustion engine and/or an electrical machine. The oil distributor may secure oil pressure and oil flow for lubricating and/or cooling the electric machines, bearings and gears using the same transmission oil.

Vehicles may also be equipped with a multispeed transmission. For different scenarios the oil distributor may split one oil flow from one single oil pump in two different oil circuits. The same oil distributor may also be able to change or switch oil circuit from the oil pump for the most robust and energy efficient option. Therefore, the oil distributor may have at least one oil inlet but have two separated oil chambers and two oil outlets connected to different oil circuits.

Known transmission oil circuits may be divided into several oil circuits which are connected to each other with a geometrical change such as a smaller cross section channel to create an increased pressure and therefore push oil into next circuit or channel until all components that should be lubricated are provided with oil. Such system may require a high oil pressure. Components that may be lubricated are bearings and gears. Instead of supplying oil for lubrication, other components in the powertrain may need to be cooled by the oil. Instead of a required high oil pressure for lubrication, an increased oil flow for cooling of these components is needed. Components that may be cooled by an oil flow are electrical machines, bearings and gears.

The document EP2667053 A2 shows a cooling arrangement for motor vehicle power train, provided with a cooling fluid circuit that is controlled such that conveyed fluid is supplied to as friction clutch or to an electric machine, if required. US 4 756 330 shows an oil distributor in a powertrain, the oil distributor comprising a housing provided with one first oil inlet and two oil outlets.

### SUMMARY OF THE INVENTION

The required oil flow for removing heat losses from an electric machine may be very high. Therefore, it may be difficult to design an oil system for both cooling and lubrication with same oil circuit. Using an increased oil flow for cooling may lead to that bearings and gears may be lubricated by oil splash and oil bath by the same oil circuit. Instead, two separated and individually controlled oil systems may be used, each optimized for its special purpose. Such separated oil systems may however be negative for cost and maintenance reasons.

There is a need to further develop an oil distributor for a lubricating and cooling system in a powertrain which independently may optimize the cooling and lubrication with their required parameters for enabling high cool oil flow for heat generating components, and pressured circulated oil for lubrication of components.

The object of the invention is therefore to develop an oil distributor for a lubricating and cooling system in a powertrain which independently may optimize the coolingand lubrication with their required parameters for enabling high cool oil flow for heat generating components, and pressured circulated oil for lubrication of components. The herein mentioned object may be achieved by the above-mentioned oil distributor for a lubricating and cooling system in a powertrain according to the appending claims.

According to the invention the oil distributor comprises a housing provided with at least one first oil inlet and at least two oil outlets. A first oil outlet may be connected to a first oil chamber and a second oil outlet may be connected to a second oil chamber. A piston may be arranged in a cavity of the housing. A piston may be movable between a first and a second position. The first oil outlet may be adapted to be connected to a first oil circuit. The second oil outlet may be adapted to be connected to a second oil circuit. The piston may comprise a first bore directed in a longitudinal direction of the piston. The second oil chamber may be at least in part constituted by the first bore in the piston. The piston may comprise a second bore connecting the first bore with an outer periphery of the piston, so that when the piston is in the first position the at least one first oil inlet may be connected to the first oil chamber and the first oil outlet, and when the piston is in the second position the at least one first oil inlet may be connected to the second oil chamber and the second oil outlet. A second oil inlet may be arranged in the housing of the oil distributor and a third bore may be arranged in the piston, which connects the first bore with an outer periphery of the piston, so that when the piston is in the first position the second oil inlet may be connected to the second oil chamber and the second oil outlet

The oil distributor may supply oil in two different circuits. Each circuit can be optimized for its purpose such as to secure the cooling performance of an electrical machine and to secure the endurance of transmission components, such as bearings and gears. The movable piston may be an on demand piston which direct links together the at least one first oil inlet with one of the chambers. The piston may close one of the two chambers and as a result supplying an oil flow for cooling or supplying oil for lubrication. The movable piston may be a one way air cylinder provided with a spring return. Other actuating means may be a two way air cylinder or an electrical power means with high precision for setting the piston in an accurate position.

According to a further aspect of the invention the at least one first oil inlet and the at least two oil outlets may be so arranged in the housing of the oil distributor that the at least one first oil inlet may be connected to both the first and second oil chambers and thus to the first and second oil outlets when the piston is arranged in a position between the first and the second position.

The movable piston may connect the at least one first oil inlet with both chambers and both oil outlets simultaneously. The piston may leave a pre-defined flow for booth cooling and lubrication.

A second oil inlet may increase the oil flow and increase the possibility to accurately control the oil distributor and independently optimize the cooling and lubrication with their required parameters for enabling high cool oil flow for heat generating components, and pressured circulated oil for lubrication of components.

According to a further aspect of the invention a bypass channel may be arranged between the first oil chamber and another position in the cavity of the housing, so that when the piston is in the second position the second oil inlet may be connected to the first oil chamber and the first oil outlet via the bypass channel.

The bypass channel may make it possible to connect the second oil inlet to the first oil chamber and the first oil outlet.

According to a further aspect of the invention a cut out may be arranged in the piston, so that when the piston is in the second position the second oil inlet may be connected to the bypass channel by means of the cut out in the piston.

The cut out in the piston may have an extension in the longitudinal direction of the piston which may be adapted to the size of an bypass opening at the another position in the cavity of the housing, so that the second oil inlet may be connected to the bypass channel through the bypass opening and by means of the cut out in the piston.

According to a further aspect of the invention the second oil inlet and the at least two oil outlets may be so arranged in the housing of the oil distributor that the second oil inlet may be connected to both the first and second oil chambers and thus to the first and second oil outlets when the piston is arranged in a position between the first and the second position.

The movable piston may connect the second oil inlet with both chambers and both oil outlets simultaneously. The piston may leave a pre-defined flow for booth cooling and lubrication.

According to the invention a lubricating and cooling system in a powertrain may comprise a first oil circuit for cooling a first powertrain component and a second oil circuit for cooling a second powertrain component. The system further may comprise the oil distributor.

Such lubricating and cooling system in a powertrain may independently optimize the cooling and lubrication with their required parameters for enabling high cool oil flow in the first oil circuit for cooling a first powertrain component, and pressured circulated oil in the second oil circuit for cooling a second powertrain component.

According to a further aspect of the invention the first powertrain component may be an electrical machine and the second powertrain component may be a gearbox.

An electrical machine may generate heat and must be cooled to a preferred working temperature in order to achieve an optimized function and durability. The gearbox may comprise bearings and gears which may be lubricated in order to achieve an optimized function and durability.

According to a further aspect of the invention an electrical controlled oil pump may be connected to the at least one first oil inlet.

The electrical oil pump may be used for supplying oil both to the first oil circuit for cooling the first powertrain component and to the second oil circuit for cooling the second powertrain component.

According to a further aspect of the invention a mechanical controlled oil pump may be connected to the second oil inlet.

The mechanical oil pump may be used for supplying oil both to the first oil circuit for cooling the first powertrain component and to the second oil circuit for cooling the second powertrain component.

The electrical oil pump may mainly be used for cooling and the mechanical pump may mainly be used for lubrication. With the oil distributor in place the cooling and lubrication circuits may independently be optimized with their required parameters which enables high cool oil flow to the electrical machine for high performance, and pressured circulated oil for a durable lubrication system for the components to be lubricated.

For some gearbox variants the shafts may have no defined rotation direction and in some driving modes the mechanical pump may be outside its operation field. In these driving modes it may be necessary to have an oil distributor to switch and guide oil from the electrical oil pump to lubrication positions. It is also energy efficient when there is a high oil flow from the mechanical pump, due to high rotation speed on rotating components in the gearbox, to switch and cool the electrical machine by oil flow supplied by the mechanical pump and lubricate the components in the transmission by oil supplied by the electric pump at lower energy consumption.

The oil distributor may also be necessary on powertrains without an internal combustion engine and when no gearbox may be needed and therefore no mechanical connected pump may be available. In these applications the electrical oil pump may supply both the cooling and lubrication circuits with oil. In order to ensure correct oil distribution an active controlled distributor with predefined oil flow split may be needed instead of being dependent on a pressure difference which may differ depending on operation mode and oil temperature.

According to the invention a method of controlling a lubricating and cooling system in a powertrain may comprise an oil distributor which may comprise a housing provided with at least one first oil inlet and at least two oil outlets. A first oil outlet may be connected to a first oil chamber. A second oil outlet may be connected to a second oil chamber. A piston may be arranged in a cavity of the housing, which piston may be movable between a first and a second position. The piston may comprise a first bore directed in a longitudinal direction of the piston, so that the second oil chamber may at least in part be constituted by the first bore in the piston. The piston may comprise a second bore connecting the first bore with an outer periphery of the piston, so that when the piston is in the first position the at least one first oil inlet may be connected to the first oil chamber and the first oil outlet, and when the piston is in the second position the at least one first oil inlet may be connected to the second oil chamber and the second oil outlet. A second oil inlet is be arranged in the housing of the oil distributor and a third bore may be arranged in the piston, which connects the first bore with an outer periphery of the piston, so that when the piston is in the first position the second oil inlet may be connected to the second oil chamber and the second oil outlet. A first oil circuit for cooling a first powertrain component may be connected to the first oil outlet. A second oil circuit for lubricating a second powertrain component may be connected to the second oil outlet. The method may comprise the steps of: a) controlling the pressure and flow of oil to the at least one first oil inlet by means of an electrical controlled oil pump connected to the at least one first oil inlet; and b) controlling the position of the piston in order to control the pressure and flow of oil through the first oil outlet and into the first oil circuit for cooling the first powertrain component and in order to control the pressure and flow of oil through the second oil outlet and into the second oil circuit for lubricating the second powertrain component.

Controlling of the pressure and flow of oil may be achieved by controlling the power to the electrical controlled oil pump. By also controlling the position of the piston in order to control the pressure and flow of oil, a high cool oil flow for heat generating components, and pressured circulated oil for transmission components may optimized independently.

According to a further aspect of the invention the method may comprise the further steps of: c) controlling the pressure and flow of oil to a second oil inlet by means of a mechanical controlled oil pump connected to the second oil inlet; and d) controlling the position of the piston in order to control the pressure and flow of oil through the first oil outlet and into the first oil circuit for cooling the first powertrain component and/or in order to control the pressure and flow of oil through the second oil outlet and into the second oil circuit for lubricating the second powertrain component.

Controlling of the pressure and flow of oil may be achieved by controlling the driving conditions of the transmission connected to the mechanical controlled oil pump. By also controlling the position of the piston in order to control the pressure and flow of oil a high cool oil flow for heat generating components, and pressurized circulated oil for transmission components may optimized independently.

An electrical machine generates heat and therefore may be cooled to a preferred working temperature in order to achieve an optimized function and durability. When cooling the electrical machine the heat electrical machine may be transferred to the oil. For this reason the oil in the first oil circuit may be cooled by means of an oil cooler.

Additional objectives, advantages and novel features of the invention will be apparent to one skilled in the art from the following details, and through exercising the invention. While the invention is described below, it should be apparent that the invention may be not limited to the specifically described details. One skilled in the art, having access to the teachings herein, will recognize additional applications, modifications and incorporations in other areas, which are within the scope of the invention.

### BRIEF DESCRIPTION OF THE DRAWINGS

Below is a description of, as examples, preferred embodiments with reference to the enclosed drawings, in which:
Fig. 1 shows schematically a vehicle in a side view with an oil distributor for a lubricating and cooling system according to an embodiment,
Fig. 2a shows a cross section of the oil distributor according to an embodiment,
Fig. 2b shows a back side view of the oil distributor according to an embodiment,
Fig. 3 shows a cross section of the oil distributor according to an embodiment,
Fig. 4 shows a cross section of the oil distributor according to an embodiment,
Fig. 5 shows schematically a lubricating and cooling system according to an embodiment, and
Fig. 6 shows a flow chart for a method of controlling a lubricating and cooling system in a powertrain according to an embodiment.

### DETAILED DESCRIPTION OF THE DRAWINGS

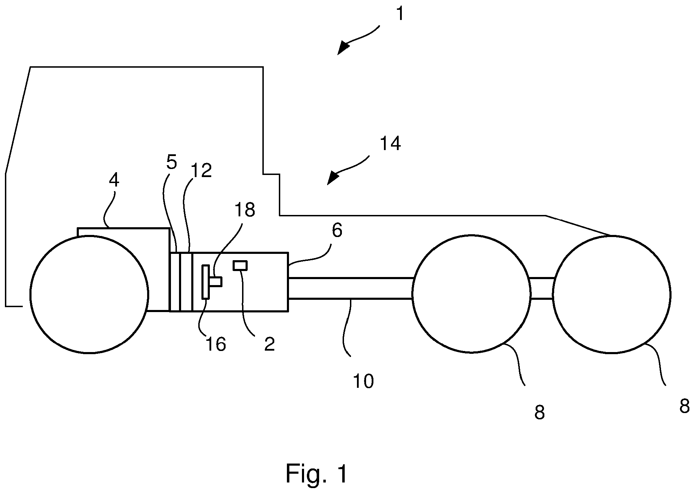

Fig. 1 shows schematically a vehicle 1 in a side view, which may be provided with an oil distributor 2 according to an embodiment. The vehicle 1 may also be provided with an internal combustion engine 4, a clutch 5, a gearbox 6, a propeller shaft 10 and drive wheels 8. The combustion engine 4 may be coupled to the gearbox 6 via the clutch 5. The gearbox 6 may be connected to the drive wheels 8 of the vehicle 1 via the propeller shaft 10. Instead of or in combination with the internal combustion engine 4 the vehicle 1 may be provided with an electrical machine 12 as part of a powertrain 14 in the vehicle 1. The gearbox 6 may comprise gears16 and bearings 18.

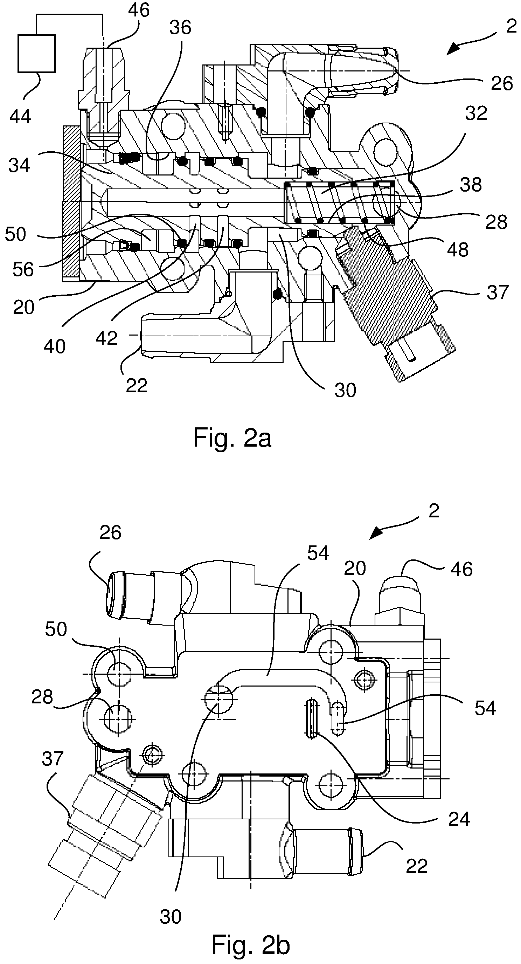

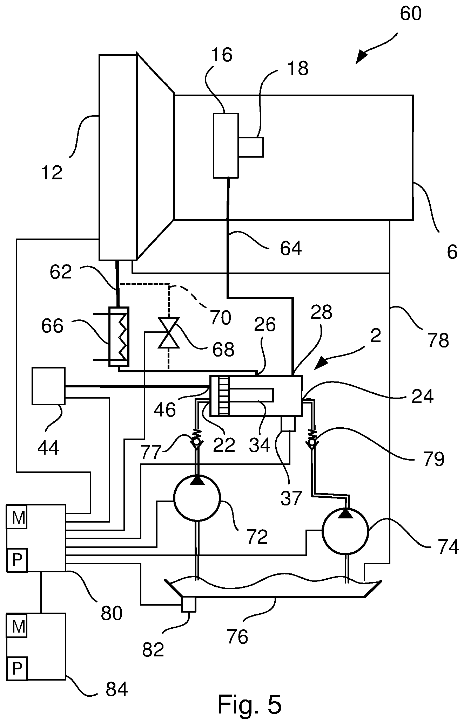

Fig. 2a shows a cross section of the oil distributor 2 according to an embodiment. The oil distributor 2 may comprise a housing 20 provided with a first oil inlet 22 and a second oil inlet 24 (shown in fig. 2b). Also a first oil outlet 26 and a second oil outlet 28 may be arranged in the housing 20. However, at least one first oil inlet 22 and at least two oil outlets 26, 28 may be arranged in the housing 20. The first oil outlet 26 may be connected to a first oil chamber 30 and the second oil outlet 28 may be connected to a second oil chamber 32. A piston 34 may be arranged in a cavity 36 of the housing 20, which piston 34 may be movable between a first and a second position. A position sensor 37 may be arranged at the housing 20 for receiving information about the position of the piston 34 in the oil distributor 2. In fig. 2a the piston 34 has been moved to the first position. The piston 34 may comprise a first bore 38 directed in a longitudinal direction of the piston 34. The second oil chamber 32 may be at least in part constituted by the first bore 38 in the piston 34. The piston 34 may comprise a second bore 40 connecting the first bore 38 with an outer periphery of the piston 34. When the piston 34 is in the first position the first oil inlet 22 may be connected to the first oil chamber 30 and the first oil outlet 26. A third bore 42 may be arranged in the piston 34, which connects the first bore 38 with an outer periphery of the piston 34. When the piston 34 is in the first position the second oil inlet 24 may be connected to the second oil chamber 32 and the second oil outlet 28. An actuating means 44 (see fig. 5) may be arranged for moving the piston 34 to the different positions in the oil distributor 2. An air inlet 46 for pneumatically control the position of the piston 34 may be arranged in the housing 20. A spring 48 may be arranged in the first oil chamber 30 and in the first bore 38 of the piston 34. When over pressurized air is provided through the air inlet 46, the force from the spring 48 may be exceeded and the piston 34 will move in the direction of the second position. When the air pressure is relieved the force from the spring 48 may move the piston 34 towards the first position. Sealing elements 50 are arranged on the piston 34 for sealing of different volumes along the length of the piston 34.

Fig. 2b shows a back side view of the oil distributor 2 according to an embodiment. The second oil inlet 24 may be arranged in the housing 20 of the oil distributor 2. The back side of the housing 20 of the oil distributor 2 may be configured to be connected to the gearbox 6. The second oil inlet 24 may therefore be connected to an opening (not disclosed) in the gearbox 6 from which oil is delivered to the oil distributor 2. The housing 20 of the oil distributor 2 may also be provided with holes 52 for fasteners (not disclosed), so that the oil distributor 2 can be fixed to the gearbox 6. A bypass channel 54 may be arranged between the first oil chamber 30 and a bypass opening 58 at another position in the cavity 36 of the housing 20. The bypass channel 54 may make it possible to connect the second oil inlet 24 to the first oil chamber 30 and the first oil outlet 26. The second oil inlet 24 may increase the oil flow and increase the possibility to accurately control the oil distributor 2 and independently optimize the cooling and lubrication with their required parameters for enabling high cool oil flow for heat generating components, and pressured circulated oil for lubrication of components.

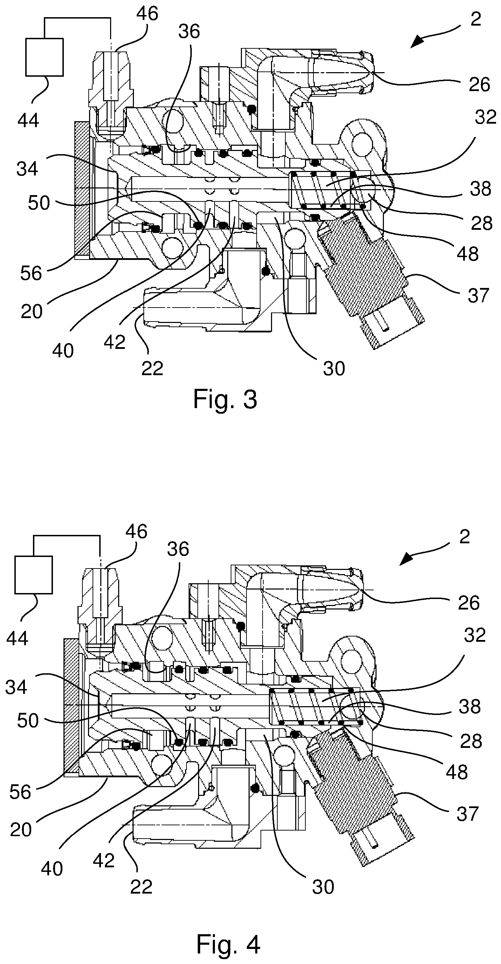

Fig. 3 shows a cross section of the oil distributor 2 according to an embodiment. In fig. 3 the piston 34 has been moved to the second position. When the piston 34 is in the second position the first oil inlet 22 may be connected to the second oil chamber 32 and the second oil outlet 28. When the piston 34 is in the second position the second oil inlet 24 may be connected to the first oil chamber 30 and the first oil outlet 26 via the bypass channel 54. A cut out 56 may be arranged in the piston 34. When the piston 34 is in the second position the second oil inlet 24 may be connected to the bypass channel 54 by means of the cut out 56 arranged in the piston 34. The cut out 56 in the piston 34 may have an extension in the longitudinal direction of the piston 34 which is adapted to the size of the bypass opening 58 at the another position in the cavity 36 of the housing 20, so that the second oil inlet 24 may be connected to the bypass channel 54 through the bypass opening 58 and by means of the cut out 56 in the piston 34.

Fig. 4 shows a cross section of the oil distributor 2 according to an embodiment. In fig. 4 the piston 34 has been moved to a position between the first and the second positions, which may be an intermediate position. The first oil inlet 22 and the first and second oil outlets 26, 28 may be so arranged in the housing 20 of the oil distributor 2 that the first oil inlet 22 may be connected to both the first and second oil chambers 30, 32 and thus to the first and second oil outlet 26, 28 when the piston 34 is arranged in a position between the first and the second position. The second oil inlet 24 and the first and second oil outlets 26, 28 may be so arranged in the housing 20 of the oil distributor 2 that the second oil inlet 24 may be connected to both the first and second oil chambers 30, 32 and thus to the first and second oil outlet 26, 28 when the piston 34 is arranged in the position between the first and the second position. Thus, the movable piston 34 may connect the first oil inlet 22 with both chambers and both oil outlets simultaneously. Also, the movable piston 34 may connect the second oil inlet 24 with both oil chambers 30, 32 and both oil outlets 26, 28 simultaneously. The piston 34 may in the intermediate position leave a pre-defined flow for booth cooling and lubrication.

The movable piston 34 may in the intermediate position connect the at least one first oil inlet 22 with both chambers 30, 32 and both oil outlets 26, 28 simultaneously. The piston 34 may be an on demand piston 34 which direct links together the at least one first oil inlet 22 with one of the chambers 30, 32. The piston 34 may close one of the two chambers 30, 32 and as a result supplying an oil flow for cooling or supplying oil for lubrication. The movable piston 34 may be a one way air cylinder provided with a spring 48 for returning the piston 34 to the first and the intermediate position. Other actuating means 44 may be a two way air cylinder or an electrical power means with high precision that may set the piston 34 in an accurate position.

Fig. 5 shows schematically a lubricating and cooling system 60 according to an embodiment. The lubricating and cooling system 60 comprises a first oil circuit 62 for cooling a first powertrain component, such as the electrical machine 12. The system 60 also comprises a second oil circuit 64 for lubricating a second powertrain component, such as bearings 18 and gears 16 in a gearbox 6. The electrical machine 12 generates heat and may be cooled to a preferred working temperature in order to achieve an optimized function and durability. A radiator or oil cooler 66 is arranged in the first oil circuit 62 for cooling the oil. A thermostat 68 is arranged in a bypass conduit 70. When the oil temperature is over a certain temperature, the thermostat 68 opens and oil may bypass the oil cooler 66. The gearbox 6 may comprise bearings 18 and gears 16 which may be lubricated in order to achieve an optimized function and durability. The system 60 further comprises the oil distributor 2. The first oil outlet 26 of the oil distributor 2 may be adapted to be connected to the first oil circuit 62 and the second oil outlet 28 of the oil distributor 2 may be adapted to be connected to the second oil circuit 64. The oil distributor 2 thus supplies oil in two different circuits 62, 64. Each circuit 62, 64 can be optimized for its purpose such as to secure the cooling performance of an electrical machine 12 and to secure the endurance of transmission components, such as the bearings 18 and the gears 16 in the gearbox 6.

An electrical controlled oil pump 72 may be connected to the at least one first oil inlet 22. The electrical oil pump 72 may be used for supplying oil both to the first oil circuit 62 for cooling the first powertrain component such as the electrical machine 12 and to the second oil circuit 64 for cooling the second powertrain component such as bearings 18 and gears 16 in the gearbox 6. A mechanical controlled oil pump 74 may be connected to the second oil inlet 24. The mechanical oil pump 74 may be used for supplying oil both to the first oil circuit 62 for cooling the first powertrain component 12 and to the second oil circuit 64 for cooling the second powertrain component 16, 18. Oil is collected in a container 76 and circulated in the circuits 62, 64 by means of the pumps 72, 74. Oil is returned to the container 76 by means of a return channel 78.

The electrical oil pump 72 may mainly be used for cooling and the mechanical oil pump 74 may mainly be used for lubrication. With the oil distributor 2 in place the first and second circuits 62, 64 may independently be optimized with their required parameters, which enable high cool oil flow to the electrical machine 12 for high performance, and pressured circulated oil for a durable lubrication system for components to be lubricated.

For some gearbox variants shafts in the gearbox 6 have no defined rotation direction and in some driving modes the mechanical oil pump 74 may be outside its operation field. In these operation modes it may be necessary to have an oil distributor 2 to switch and guide oil from the electrical oil pump 72 to lubrication positions. It is also energy efficient when there is a high oil flow from the mechanical oil pump 74, due to high rotation speed on rotating components in the gearbox 6, to switch and cool the electrical machine 12 by oil flow supplied by the mechanical oil pump 74 and lubricate the components in the powertrain 14 by oil supplied by the electric oil pump 72 at lower energy consumption. Downstream the electrical oil pump 72 a first check valve 77 may be arranged in order to stop an oil flow in the direction towards the electrical oil pump 72. Downstream the mechanical oil pump 74 a second check valve 79 may be arranged in order to stop an oil flow in the direction towards the mechanical oil pump 72.

The oil distributor 2 may also be used on powertrains 14 without an internal combustion engine 4 and when no gearbox 6 may be needed and therefore no mechanical connected oil pump 74 may be available. In these applications the electrical oil pump 72 may supply both the first and second oil circuits 62, 64 with oil. To ensure correct oil distribution the oil distributor 2 with predefined oil flow split may be needed instead of being dependent on a pressure difference which may differ depending on operation mode and oil temperature.

Such lubricating and cooling system 60 in a powertrain 14 may independently optimize the cooling- and lubrication with their required parameters for enabling high cool oil flow in the first oil circuit 62 for cooling the first powertrain component 12, and pressured circulated oil in the second oil circuit 64 for lubricating the second powertrain component 16, 18.

A control unit 80 may be connected to the actuating means 44 for controlling the piston 34 position and thus controlling the distribution of oil to the first and second oil circuits 62, 64. The position sensor 37 may be connected to the control unit 80 for receiving information about the position of the piston 34 in the oil distributor 2. The control unit 80 may also be connected to the pumps 72, 74. The oil flow of the electrical pump 72 may be controlled by the control unit 80 and may be related to the temperature of the electrical machine 12 and the operation mode of the vehicle 1. The thermostat 68 may be electric or mechanic. The thermostat 68 may be connected to the control unit 80 and be controlled in relation to the oil temperature. The electrical machine 12 may be connected to the control unit 80 for sensing the temperature of the electrical machine 12. A temperature sensor 82 arranged at the oil container 76 may be connected to the control unit 80 for sensing the temperature of the oil.

The control unit 80 may comprise a computer 84, or a link to a computer 84, comprising a computer program P with programme code for receiving the data containing the current temperature of the oil and the electrical machine 12 in order to calculate the suitable position of the piston 34. The program code may be executed in the computer 84. The control unit 80 may further comprise stored data in a memory M, or a link to readable data, containing oil flow and oil pressure parameters for the first and second oil circuits 62, 64 and for different vehicle operation modes to control the position of the piston 34 and to control the oil flow and oil pressure from the pumps 72, 74. A computer program product may comprise a computer-readable medium and the computer program, which computer program may be contained in said computer-readable medium.

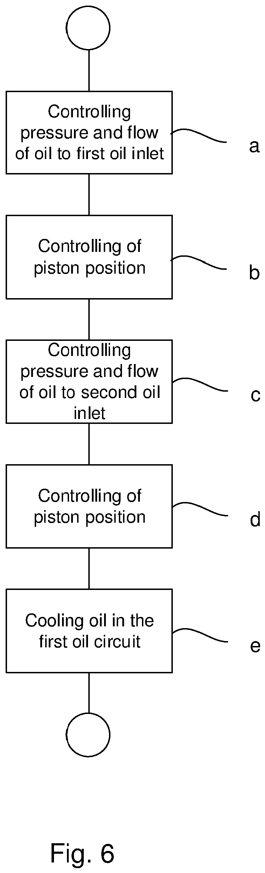

Fig. 6 shows a flow chart for a method of controlling a lubricating and cooling system 60 in a powertrain according to an embodiment. The lubricating and cooling system 60 in the powertrain 14 may comprise the features described in the embodiments above.

The method may comprise the steps of:
a) controlling the pressure and flow of oil to the at least one first oil inlet 22 by means of an electrical controlled oil pump 72 connected to the at least one first oil inlet 22; and
b) controlling the position of the piston 34 in order to control the pressure and flow of oil through the first oil outlet 26 and into the first oil circuit 62 for cooling the first powertrain 14 component and in order to control the pressure and flow of oil through the second oil outlet 28 and into the second oil circuit 64 for lubricating the second powertrain component 16, 18.

Controlling of the pressure and flow of oil may be achieved by controlling the power to the electrical controlled oil pump 72. By also controlling the position of the piston 34 in order to control the pressure and flow of oil, a high cool oil flow for heat generating components, and pressured circulated oil for lubrication of components may be optimized independently.

The method may comprise the further steps of:
c) controlling the pressure and flow of oil to a second oil inlet 24 by means of a mechanical controlled oil pump 74 connected to the second oil inlet 24; and
d) controlling the position of the piston 34 in order to control the pressure and flow of oil through the first oil outlet 26 and into the first oil circuit 62 for cooling the first powertrain component 12 and/or in order to control the pressure and flow of oil through the second oil outlet 28 and into the second oil circuit 64 for lubricating the second powertrain component 16, 18.

Controlling of the pressure and flow of oil may be achieved by controlling the driving conditions of the transmission connected to the mechanical controlled oil pump 74. By also controlling the position of the piston 34 in order to control the pressure and flow of oil, a high cool oil flow for heat generating components, and pressurized circulated oil for transmission components may be optimized independently.

The method may comprise the further step of:
e) cooling the oil in the first oil circuit 62 by means of an oil cooler 66.

The first powertrain component may be an electrical machine 12. An electrical machine 12 generates heat and must be cooled to a preferred working temperature in order to achieve an optimized function and durability. When cooling the electrical machine 12 the heat generated by the electrical machine 12 may be transferred to the oil. For this reason the oil in the first oil circuit 62 may be cooled by means of an oil cooler 66.

The computer program comprising program code that, when said program code is executed in the computer 84, causes said computer 84 to carry out the above-mentioned method. The computer program product comprising the computer-readable medium and the computer program, which computer program is contained in said computer-readable medium.

The fluid for cooling and lubrication is described as oil. However, any oil or fluid that has cooling and lubrication properties may be used.

The foregoing description of the preferred embodiments has been furnished for illustrative and descriptive purposes.

## Claims

1. An oil distributor (2) for a lubricating and cooling system (60) in a powertrain (14), the oil distributor (2) comprising a housing (20) provided with at least one first oil inlet (22) and at least two oil outlets (26, 28), wherein a first oil outlet (26) is connected to a first oil chamber (30) and wherein a second oil outlet (28) is connected to a second oil chamber (32); and a piston (34) arranged in a cavity (36) of the housing (20), which piston (34) is movable between a first and a second position, wherein the first oil outlet (26) is adapted to be connected to a first oil circuit (62) and the second oil outlet (28) is adapted to be connected to a second oil circuit (64), wherein the piston (34) comprises a first bore (38) directed in a longitudinal direction of the piston (34), wherein the second oil chamber (32) is at least in part constituted by the first bore (38) in the piston (34), and wherein the piston (34) comprises a second bore (40) connecting the first bore (38) with an outer periphery of the piston (34), so that when the piston (34) is in the first position the at least one first oil inlet (22) is connected to the first oil chamber (30) and the first oil outlet (26), and when the piston (34) is in the second position the at least one first oil inlet (22) is connected to the second oil chamber (32) and the second oil outlet (28), **characterized in that** a second oil inlet (24) is arranged in the housing (20) of the oil distributor (2) and a third bore (42) is arranged in the piston (34), which connects the first bore (38) with an outer periphery of the piston (34), so that when the piston (34) is in the first position the second oil inlet (24) is connected to the second oil chamber (32) and the second oil outlet (28).

2. The oil distributor (2) according to claim 1, **characterized in that** the at least one first oil inlet (22) and the at least two oil outlets (26, 28) are so arranged in the housing (20) of the oil distributor (2) that the at least one first oil inlet (22) is connected to both the first and second oil chambers (30, 32) and thus to the first and second oil outlet (26, 28) when the piston (34) is arranged in a position between the first and the second position.

3. The oil distributor (2) according to claim 1, **characterized in that** a bypass channel (54) is arranged between the first oil chamber (30) and another position in the cavity (36) of the housing (20), so that when the piston (34) is in the second position the second oil inlet (24) is connected to the first oil chamber (30) and the first oil outlet (26) via the bypass channel (54).

4. The oil distributor (2) according to claim 1, **characterized in that** a cut out (56) is arranged in the piston (34), so that when the piston (34) is in the second position the second oil inlet (24) is connected to the bypass channel (54) by means of the cut out (56) in the piston (34).

5. The oil distributor (2) according to claim 1, **characterized in that** the second oil inlet (24) and the at least two oil outlets (26, 28) are so arranged in the housing (20) of the oil distributor (2) that the second oil inlet (24) is connected to both the first and second oil chambers (30, 32) and thus to the first and second oil outlets (26, 28) when the piston (34) is arranged in a position between the first and the second position.

6. A lubricating and cooling system (60) in a powertrain (14), comprising a first oil circuit (62) for cooling a first powertrain component (12) and a second oil circuit (64) for cooling a second powertrain component (16, 18), **characterized in that** the system (60) further comprises an oil distributor (2) according to any of the preceding claims.

7. The lubricating and cooling system (60) according to claim 6, **characterized in that** the first powertrain component is an electrical machine (12) and the second powertrain component is gears (16) and bearings (18) in a gearbox (6).

8. The lubricating and cooling system (60) according to any of claims 6 and 7, **characterized in that** an electrical controlled oil pump (72) is connected to the at least one first oil inlet (22).

9. The lubricating and cooling system (60) according to any of claims 6-8, **characterized in that** a mechanical controlled oil pump (74) is connected to the second oil inlet (24).

10. A powertrain (14), **characterized in that** the powertrain (14) comprises a lubricating and cooling system (60) according to any of the claims 6-9.

11. A vehicle (1), **characterized in that** the vehicle (1) comprises a powertrain (14) according to claim 10.

12. A method of controlling a lubricating and cooling system (60) in a powertrain (14), the system (60) comprising an oil distributor (2) comprising a housing (20) provided with at least one first oil inlet (22) and at least two oil outlets (26, 28), wherein a first oil outlet (26) is connected to a first oil chamber (30) and wherein a second oil outlet (28) is connected to a second oil chamber (32); and a piston (34) arranged in a cavity (36) of the housing (20), which piston (34) is movable between a first and a second position, the piston (34) comprising a first bore (38) directed in a longitudinal direction of the piston (34), so that the second oil chamber (32) is at least in part constituted by the first bore (38) in the piston (34), wherein the piston (34) comprises a second bore (40) connecting the first bore (38) with an outer periphery of the piston (34), so that when the piston (34) is in the first position the at least one first oil inlet (22) is connected to the first oil chamber (30) and the first oil outlet (26), and when the piston (34) is in the second position the at least one first oil inlet (22) is connected to the second oil chamber (32) and the second oil outlet (28); wherein a second oil inlet (24) is arranged in the housing (20) of the oil distributor (2) and a third bore (42) is arranged in the piston (34), which connects the first bore (38) with an out-er periphery of the piston (34), so that when the piston (34) is in the first position the second oil inlet (24) is connected to the second oil chamber (32) and the second oil outlet (28), wherein a first oil circuit (62) for cooling a first powertrain component (12) is connected to the first oil outlet (26) and a second oil circuit (64) for lubricating a second powertrain component (16, 18) is connected to the second oil outlet (28), the method comprises the steps of:
a) controlling the pressure and flow of oil to the at least one first oil inlet (22) by means of an electrical controlled oil pump (72) connected to the at least one first oil inlet (22); and
b) controlling the position of the piston (34) in order to control the pressure and flow of oil through the first oil outlet (26) and into the first oil circuit (62) for cooling the first powertrain component (12) and in order to control the pressure and flow of oil through the second oil outlet (28) and into the second oil circuit (64) for lubricating the second powertrain component (16, 18).

13. The method according to claim 12, comprising the further steps of:
c) controlling the pressure and flow of oil to a second oil inlet (24) by means of a mechanical controlled oil pump (74) connected to the second oil inlet (24); and
d) controlling the position of the piston (34) in order to control the pressure and flow of oil through the first oil outlet (26) and into the first oil circuit (62) for cooling the first powertrain component (12) and/or in order to control the pressure and flow of oil through the second oil outlet (28) and into the second oil circuit (64) for lubricating the second powertrain component (16, 18).

14. The method according to any of claims 12 and 13, comprising the further step of: e) cooling the oil in the first oil circuit (62) by means of an oil cooler (66).

15. A computer program comprising program code that, when said program code is executed in a computer (84), causes said computer (84) to carry out the method according to any of claims 12-14.

16. A computer program product comprising a computer-readable medium and a computer program according to claim 15, wherein said computer program is contained in said computer-readable medium.

## Patentansprüche

1. Ölverteiler (2) für ein Schmier- und Kühlsystem (60) in einem Antriebsstrang (14), wobei der Ölverteiler (2) ein Gehäuse (20), das mit mindestens einem ersten Öleinlass (22) und mindestens zwei Ölauslässen (26, 28) versehen ist, wobei ein erster Ölauslass (26) mit einer ersten Ölkammer (30) verbunden ist und wobei ein zweiter Ölauslass (28) mit einer zweiten Ölkammer (32) verbunden ist, und einen in einem Hohlraum (36) des Gehäuses (20) angeordneten Kolben (34) aufweist, der zwischen einer ersten und einer zweiten Position beweglich ist, wobei der erste Ölauslass (26) dazu eingerichtet ist, mit einem ersten Ölkreislauf (62) verbunden zu werden und der zweite Ölauslass (28) dazu eingerichtet ist, mit einem zweiten Ölkreislauf (64) verbunden zu werden, wobei der Kolben (34) eine in einer Längsrichtung des Kolbens (34) gerichtete erste Bohrung (38) umfasst, wobei die zweite Ölkammer (32) zumindest teilweise durch die erste Bohrung (38) in dem Kolben (34) gebildet ist, und wobei der Kolben (34) eine zweite Bohrung (40) umfasst, die die erste Bohrung (38) mit einem Außenumfang des Kolbens (34) verbindet, so dass, wenn der Kolben (34) in der ersten Position ist, der mindestens eine erste Öleinlass (22) mit der ersten Ölkammer (30) und dem ersten Ölauslass (26) verbunden ist, und wenn der Kolben (34) in der zweiten Position ist, der mindestens eine erste Öleinlass (22) mit der zweiten Ölkammer (32) und dem zweiten Ölauslass (28) verbunden ist, **dadurch gekennzeichnet, dass** in dem Gehäuse (20) des Ölverteilers (2) ein zweiter Öleinlass (24) angeordnet ist und in dem Kolben (34) eine dritte Bohrung (42) angeordnet ist, die die erste Bohrung (38) mit einem Außenumfang des Kolbens (34) verbindet, so dass in der ersten Position des Kolbens (34) der zweite Öleinlass (24) mit der zweiten Ölkammer (32) und dem zweiten Ölauslass (28) verbunden ist.

2. Ölverteiler (2) nach Anspruch 1, **dadurch gekennzeichnet, dass** der mindestens eine erste Öleinlass (22) und die mindestens zwei Ölauslässe (26, 28) so im Gehäuse (20) des Ölverteilers (2) angeordnet sind, dass der mindestens eine erste Öleinlass (22) sowohl mit der ersten als auch mit der zweiten Ölkammer (30, 32) und damit mit dem ersten und zweiten Ölauslass (26, 28) verbunden ist, wenn der Kolben (34) sich in einer Position zwischen der ersten und der zweiten Position befindet.

3. Ölverteiler (2) nach Anspruch 1, **dadurch gekennzeichnet, dass** zwischen der ersten Ölkammer (30) und einer anderen Position im Hohlraum (36) des Gehäuses (20) ein Bypass-Kanal (54) angeordnet ist, so dass der zweite Öleinlass (24) über den Bypass-Kanal (54) mit der ersten Ölkammer (30) und dem ersten Ölauslass (26) verbunden ist, wenn sich der Kolben (34) in der zweiten Position befindet.

4. Ölverteiler (2) nach Anspruch 1, **dadurch gekennzeichnet, dass** im Kolben (34) eine Aussparung (56) angeordnet ist, so dass in der zweiten Stellung des Kolbens (34) der zweite Öleinlass (24) über die Aussparung (56) im Kolben (34) mit dem Bypasskanal (54) verbunden ist.

5. Ölverteiler (2) nach Anspruch 1, **dadurch gekennzeichnet, dass** der zweite Öleinlass (24) und die mindestens zwei Ölauslässe (26, 28) so im Gehäuse (20) des Ölverteilers (2) angeordnet sind, dass der zweite Öleinlass (24) sowohl mit der ersten als auch mit der zweiten Ölkammer (30, 32) und damit mit dem ersten und zweiten Ölauslass (26, 28) verbunden ist, wenn sich der Kolben (34) in einer Position zwischen der ersten und der zweiten Position befindet.

6. Schmier- und Kühlsystem (60) in einem Antriebsstrang (14), mit einem ersten Ölkreislauf (62) zum Kühlen einer ersten Antriebsstrangkomponente (12) und einem zweiten Ölkreislauf (64) zum Kühlen einer zweiten Antriebsstrangkomponente (16, 18), **dadurch gekennzeichnet, dass** das System (60) ferner einen Ölverteiler (2) nach einem der vorhergehenden Ansprüche umfasst.

7. Schmier- und Kühlsystem (60) nach Anspruch 6, **dadurch gekennzeichnet, dass** die erste Antriebsstrangkomponente eine elektrische Maschine (12) ist und die zweite Antriebsstrangkomponente Zahnräder (16) und Lager (18) in einem Getriebe (6) sind.

8. Schmier- und Kühlsystem (60) nach einem der Ansprüche 6 oder 7, **dadurch gekennzeichnet, dass** eine elektrisch gesteuerte Ölpumpe (72) mit dem mindestens einen ersten Öleinlass (22) verbunden ist.

9. Schmier- und Kühlsystem (60) nach einem der Ansprüche 6 bis 8, **dadurch gekennzeichnet, dass** eine mechanisch gesteuerte Ölpumpe (74) mit dem zweiten Öleinlass (24) verbunden ist.

10. Antriebsstrang (14), **dadurch gekennzeichnet, dass** der Antriebsstrang (14) ein Schmier- und Kühlsystem (60) nach einem der Ansprüche 6 - 9 umfasst.

11. Fahrzeug (1), **dadurch gekennzeichnet, dass** das Fahrzeug (1) einen Antriebsstrang (14) nach Anspruch 10 umfasst.

12. Verfahren zur Steuerung eines Schmier- und Kühlsystems (60) in einem Antriebsstrang (14), wobei das System (60) einen Ölverteiler (2) umfasst, der ein Gehäuse (20), das mit mindestens einem ersten Öleinlass (22) und mindestens zwei Ölauslässen (26, 28) versehen ist, wobei ein erster Ölauslass (26) mit einer ersten Ölkammer (30) verbunden ist und wobei ein zweiter Ölauslass (28) mit einer zweiten Ölkammer (32) verbunden ist, und einen in einem Hohlraum (36) des Gehäuses (20) angeordneten Kolben (34) aufweist, wobei der Kolben (34) zwischen einer ersten und einer zweiten Position bewegbar ist, wobei der Kolben (34) eine in einer Längsrichtung des Kolbens (34) gerichtete erste Bohrung (38) umfasst, so dass die zweite Ölkammer (32) zumindest teilweise von der ersten Bohrung (38) in dem Kolben (34) gebildet ist, wobei der Kolben (34) eine zweite Bohrung (40) umfasst, die die erste Bohrung (38) mit einem Außenumfang des Kolbens (34) verbindet, so dass, wenn der Kolben (34) in der ersten Position ist, der mindestens eine erste Öleinlass (22) mit der ersten Ölkammer (30) und dem ersten Ölauslass (26) verbunden ist, und wenn der Kolben (34) in der zweiten Position ist, der mindestens eine erste Öleinlass (22) mit der zweiten Ölkammer (32) und dem zweiten Ölauslass (28) verbunden ist, wobei ein zweiter Öleinlass (24) in dem Gehäuse (20) des Ölverteilers (2) angeordnet ist und eine dritte Bohrung (42) in dem Kolben (34) angeordnet ist, die die erste Bohrung (38) mit einem Außenumfang des Kolbens (34) verbindet, so dass, wenn der Kolben (34) in der ersten Position ist, der zweite Öleinlass (24) mit der zweiten Ölkammer (32) und dem zweiten Ölauslass (28) verbunden ist, wobei ein erster Ölkreislauf (62) zum Kühlen einer ersten Antriebsstrangkomponente (12) mit dem ersten Ölauslass (26) verbunden ist und ein zweiter Ölkreislauf (64) zum Schmieren einer zweiten Antriebsstrangkomponente (16, 18) mit dem zweiten Ölauslass (28) verbunden ist, wobei das Verfahren die Schritte umfasst:
a) Steuern des Drucks und des Ölflusses zu dem mindestens einen ersten Öleinlass (22) mittels einer elektrisch gesteuerten Ölpumpe (72), die mit dem mindestens einen ersten Öleinlass (22) verbunden ist, und
b) Steuern der Position des Kolbens (34), um den Druck und den Ölfluss durch den ersten Ölauslass (26) und in den ersten Ölkreislauf (62) zum Kühlen der ersten Antriebsstrangkomponente (12) zu steuern, und um den Druck und den Ölfluss durch den zweiten Ölauslass (28) und in den zweiten Ölkreislauf (64) zum Schmieren der zweiten Antriebsstrangkomponente (16, 18) zu steuern.

13. Verfahren nach Anspruch 12, umfassend die weiteren Schritte:
c) Steuern des Drucks und des Ölflusses zu einem zweiten Öleinlass (24) mittels einer mechanisch gesteuerten Ölpumpe (74), die mit dem zweiten Öleinlass (24) verbunden ist, und
d) Steuern der Position des Kolbens (34), um den Druck und den Ölfluss durch den ersten Ölauslass (26) und in den ersten Ölkreislauf (62) zum Kühlen der ersten Antriebsstrangkomponente (12) zu steuern und/oder um den Druck und den Ölfluss durch den zweiten Ölauslass (28) und in den zweiten Ölkreislauf (64) zum Schmieren der zweiten Antriebsstrangkomponente (16, 18) zu steuern.

14. Verfahren nach einem der Ansprüche 12 oder 13, umfassend den weiteren Schritt:
e) Kühlen des Öls im ersten Ölkreislauf (62) mittels eines Ölkühlers (66).

15. Computerprogramm mit einem Programmcode, der, wenn der Programmcode in einem Computer (84) ausgeführt wird, den Computer (84) veranlasst, das Verfahren nach einem der Ansprüche 12 bis 14 auszuführen.

16. Computerprogrammprodukt, umfassend ein computerlesbares Medium und ein Computerprogramm nach Anspruch 15, wobei das Computerprogramm in dem computerlesbaren Medium enthalten ist.

## Revendications

1. Distributeur d'huile (2) pour un système de lubrification et de refroidissement (60) dans un groupe motopropulseur (14), le distributeur d'huile (2) comprenant un logement (20) muni d'au moins une première entrée d'huile (22) et d'au moins deux sorties d'huile (26, 28), dans lequel une première sortie d'huile (26) est raccordée à une première chambre d'huile (30) et dans lequel une deuxième sortie d'huile (28) est raccordée à une deuxième chambre d'huile (32) ; et un piston (34) agencé dans une cavité (36) du logement (20), lequel piston (34) est mobile entre une première et une deuxième position, dans lequel la première sortie d'huile (26) est adaptée pour être raccordée à un premier circuit d'huile (62) et la deuxième sortie d'huile (28) est adaptée pour être raccordée à un deuxième circuit d'huile (64), dans lequel le piston (34) comprend un premier alésage (38) dirigé dans une direction longitudinale du piston (34), dans lequel la deuxième chambre d'huile (32) est au moins en partie constituée par le premier alésage (38) dans le piston (34), et dans lequel le piston (34) comprend un deuxième alésage (40) raccordant le premier alésage (38) à une périphérie externe du piston (34), de sorte que lorsque le piston (34) est dans la première position, l'au moins une première entrée d'huile (22) est raccordée à la première chambre d'huile (30) et à la première sortie d'huile (26), et lorsque le piston (34) est dans la deuxième position, l'au moins une première entrée d'huile (22) est raccordée à la deuxième chambre d'huile (32) et à la deuxième sortie d'huile (28), **caractérisé en ce qu'**une deuxième entrée d'huile (24) est agencée dans le logement (20) du distributeur d'huile (2) et un troisième alésage (42) est agencé dans le piston (34), qui raccorde le premier alésage (38) à une périphérie externe du piston (34), de sorte que lorsque le piston (34) est dans la première position, la deuxième entrée d'huile (24) est raccordée à la deuxième chambre d'huile (32) et à la deuxième sortie d'huile (28).

2. Distributeur d'huile (2) selon la revendication 1, **caractérisé en ce que** l'au moins une première entrée d'huile (22) et les au moins deux sorties d'huile (26, 28) sont agencées dans le logement (20) du distributeur d'huile (2) de telle sorte que l'au moins une première entrée d'huile (22) est raccordée à la fois à la première et à la deuxième chambres d'huile (30, 32) et donc à la première et à la deuxième sorties d'huile (26, 28) lorsque le piston (34) est agencé dans une position entre la première et la deuxième positions.

3. Distributeur d'huile (2) selon la revendication 1, **caractérisé en ce qu'**un canal de dérivation (54) est agencé entre la première chambre d'huile (30) et une autre position dans la cavité (36) du logement (20), de sorte que lorsque le piston (34) est dans la deuxième position, la deuxième entrée d'huile (24) est raccordée à la première chambre d'huile (30) et à la première sortie d'huile (26) par l'intermédiaire du canal de dérivation (54).

4. Distributeur d'huile (2) selon la revendication 1, **caractérisé en ce qu'**une découpe (56) est agencée dans le piston (34), de sorte que lorsque le piston (34) est dans la deuxième position, la deuxième entrée d'huile (24) est raccordée au canal de dérivation (54) au moyen de la découpe (56) dans le piston (34).

5. Distributeur d'huile (2) selon la revendication 1, **caractérisé en ce que** la deuxième entrée d'huile (24) et les au moins deux sorties d'huile (26, 28) sont agencées dans le logement (20) du distributeur d'huile (2) de telle sorte que la deuxième entrée d'huile (24) est raccordée à la fois à la première et à la deuxième chambres d'huile (30, 32) et donc à la première et à la deuxième sorties d'huile (26, 28) lorsque le piston (34) est agencé dans une position entre la première et la deuxième positions.

6. Système de lubrification et de refroidissement (60) dans un groupe motopropulseur (14), comprenant un premier circuit d'huile (62) pour refroidir un premier composant de groupe motopropulseur (12) et un deuxième circuit d'huile (64) pour refroidir un deuxième composant de groupe motopropulseur (16, 18), **caractérisé en ce que** le système (60) comprend en outre un distributeur d'huile (2) selon l'une quelconque des revendications précédentes.

7. Système de lubrification et de refroidissement (60) selon la revendication 6, **caractérisé en ce que** le premier composant de groupe motopropulseur est une machine électrique (12) et le deuxième composant de groupe motopropulseur est des engrenages (16) et des paliers (18) dans une boîte de vitesses (6).

8. Système de lubrification et de refroidissement (60) selon l'une quelconque des revendications 6 et 7, **caractérisé en ce qu'**une pompe à huile commandée électriquement (72) est raccordée à l'au moins une première entrée d'huile (22).

9. Système de lubrification et de refroidissement (60) selon l'une quelconque des revendications 6 à 8, **caractérisé en ce qu'**une pompe à huile à commande mécanique (74) est raccordée à la deuxième entrée d'huile (24).

10. Groupe motopropulseur (14), **caractérisé en ce que** le groupe motopropulseur (14) comprend un système de lubrification et de refroidissement (60) selon l'une quelconque des revendications 6 à 9.

11. Véhicule (1), **caractérisé en ce que** le véhicule (1) comprend une boîte de vitesses (14) selon la revendication 10.

12. Procédé de commande d'un système de lubrification et de refroidissement (60) dans un groupe motopropulseur (14), le système (60) comprenant un distributeur d'huile (2) comprenant un logement (20) muni d'au moins une première entrée d'huile (22) et d'au moins deux sorties d'huile (26, 28), dans lequel une première sortie d'huile (26) est raccordée à une première chambre d'huile (30) et dans lequel une deuxième sortie d'huile (28) est raccordée à une deuxième chambre d'huile (32) ; et un piston (34) agencé dans une cavité (36) du logement (20), lequel piston (34) est mobile entre une première et une deuxième position, le piston (34) comprenant un premier alésage (38) dirigé dans une direction longitudinale du piston (34), de sorte que la deuxième chambre d'huile (32) est au moins en partie constituée par le premier alésage (38) dans le piston (34), dans lequel le piston (34) comprend un deuxième alésage (40) raccordant le premier alésage (38) à une périphérie externe du piston (34), de sorte que lorsque le piston (34) est dans la première position, l'au moins une première entrée d'huile (22) est raccordée à la première chambre d'huile (30) et à la première sortie d'huile (26), et lorsque le piston (34) est dans la deuxième position, l'au moins une première entrée d'huile (22) est raccordée à la deuxième chambre d'huile (32) et à la deuxième sortie d'huile (28) ; dans lequel une deuxième entrée d'huile (24) est agencée dans le logement (20) du distributeur d'huile (2) et un troisième alésage (42) est agencé dans le piston (34), qui raccorde le premier alésage (38) à une périphérie externe du piston (34), de sorte que lorsque le piston (34) est dans la première position, la deuxième entrée d'huile (24) est raccordée à la deuxième chambre d'huile (32) et à la deuxième sortie d'huile (28), dans lequel un premier circuit d'huile (62) pour refroidir un premier composant de groupe motopropulseur (12) est raccordé à la première sortie d'huile (26) et un deuxième circuit d'huile (64) pour lubrifier un deuxième composant de groupe motopropulseur (16, 18) est raccordé à la deuxième sortie d'huile (28), le procédé comprend les étapes de :
a) commande de la pression et du débit d'huile vers l'au moins une première entrée d'huile (22) au moyen d'une pompe à huile commandée électriquement (72) raccordée à l'au moins une première entrée d'huile (22) ; et
b) commande de la position du piston (34) afin de commander la pression et le débit d'huile à travers la première sortie d'huile (26) et dans le premier circuit d'huile (62) pour refroidir le premier composant de groupe motopropulseur (12) et afin de commander la pression et le débit d'huile à travers la deuxième sortie d'huile (28) et dans le deuxième circuit d'huile (64) pour lubrifier le deuxième composant de groupe motopropulseur (16, 18).

13. Procédé selon la revendication 12, comprenant en outre les étapes de :
c) commande de la pression et du débit d'huile vers une deuxième entrée d'huile (24) au moyen d'une pompe à huile commandée mécaniquement (74) raccordée à la deuxième entrée d'huile (24) ; et
d) commande de la position du piston (34) afin de commander la pression et le débit d'huile à travers la première sortie d'huile (26) et dans le premier circuit d'huile (62) pour refroidir le premier composant de groupe motopropulseur (12) et/ou afin de commander la pression et le débit d'huile à travers la deuxième sortie d'huile (28) et dans le deuxième circuit d'huile (64) pour lubrifier le deuxième composant de groupe motopropulseur (16, 18).

14. Procédé selon l'une quelconque des revendications 12 et 13, comprenant l'étape de :
e) refroidissement de l'huile dans le premier circuit d'huile (62) au moyen d'un refroidisseur d'huile (66).

15. Programme informatique comprenant un code de programme qui, lorsque ledit code de programme est exécuté sur un ordinateur (84), amène ledit ordinateur (84) à mettre en œuvre le procédé selon l'une quelconque des revendications 12 à 14.

16. Produit de programme informatique comprenant un support lisible par ordinateur et un programme informatique selon la revendication 15, dans lequel ledit programme informatique est contenu dans ledit support lisible par ordinateur.
